# EUROPEAN PATENT SPECIFICATION

(11) **EP 1 494 366 B1**
(45) Date of publication and mention of the grant of the patent: **14.03.2007**
(21) Application number: 03702305.8
(22) Date of filing: 27.01.2003
(51) Int. Cl.: H04B 7/005

(54) **POWER CONTROL METHOD FOR UPLINK CONTROL CHANNEL IN SOFT HANDOVER IN HIGH-SPEED PACKET ACCESS SYSTEM**
LEISTUNGSREGELVERFAHREN FÜR DEN AUFWÄRTSSTEUERKANAL BEI DER SOFT-WEITERREICHUNG IN EINEM SCHNELLEN PACKET-ACCESS-SYSTEM
PROCEDE DE COMMANDE DE PUISSANCE DESTINE A UN CANAL DE COMMANDE DE LIAISON MONTANTE DANS UN TRANSFERT SOUPLE, DANS UN SYSTEME D'ACCES PAR PAQUETS EN LIAISON DESCENDANTE A HAUT DEBIT

(30) Priority: 08.04.2002 CN 02116552
(43) Date of publication of application: 05.01.2005
(73) Proprietor: Huawei Technologies Co., Ltd., Shenzhen, Guangdong 518057 (CN)
(72) Inventor: WU, Di, I. P. D., Huawei Service Centre Bldg, Shenzhen, Guangdong 518057 (CN); WEI, Yuejun, IP Dept., Huawei Service Centre Bldg., Shenzhen, Guangdong Province 518057 (CN)
(74) Representative: Epping - Hermann - Fischer
(86) International application number: PCT/CN2003/000078
(87) International publication number: WO 2003/088519

(56) References cited:
- WO-A-01/31824
- WO-A1-99/37111
- WO-A1-99/53630
- JP-A- 2001 128 219
- PHILIPS: "Performance of ACK/NACK signalling" TSG RAN WG1 #22, 19 November 2001 (2001-11-19), pages 1-7, XP002380346 Jeju, South Korea
- "UL Power Control for HSDPA" 3GPP TSG RAN WG 1, no. 22, 19 November 2001 (2001-11-19), pages 1-4, XP002229769
- CWTS/HUAWEI: "Power Control of Uplink ACK/NACK in Soft Handover" 3GPP TSG RAN WG1 #24, no. R1-02-0215, 18 February 2002 (2002-02-18), - 22 February 2002 (2002-02-22) pages 1-5, XP002380347 Orlando, USA
- "High Speed Downlink Packet Access: Physical Layer Aspects (Release 5)" 3GPP TR 25.858 V5.0.0, XX, XX, March 2002 (2002-03), pages 1-31, XP002265002
- NOKIA: "Power offset for uplink ACK/NACK" TSG-RAN WG1 #23, 8 January 2002 (2002-01-08), - 11 January 2002 (2002-01-11) pages 1-3, XP002380348 Espoo, Finland
- NORTEL NETWORKS: "Introduction of power control aspects for HSDPA feature in TS25.214" 3GPP TSG-RAN WG1 MEETING #24, 18 February 2002 (2002-02-18), - 22 February 2002 (2002-02-22) pages 1-20, XP002380349 Orlando, USA

## Description

### Field of the Invention

The present invention relates to a method for controlling power of wireless communication system, particularly to a method for controlling power of the uplink DPCCH (Dedicated Physical Control Channel) in soft handover zone in WCDMA (Wideband Code Division Multiple Access) HSDPA (High Speed Downlink Packet Access) system.

### Background of the Invention

A HS-DPCCH in HSDPA system carries information comprising two parts: one part is ACK/NACK message fed back from UE (User Equipment) to Node B, which indicates whether the UE correctly receives the corresponding data packet sent from the Node B or not; an ACK/NACK message is sent in one time slot; The other part is downlink CQI (Channel Quality Indication) message, which is sent in 2 time slots periodically. Since CQI messages are reported periodically, there is no criterion for error rate of them; whereas ACK/NACK message errors will directly lead to a determination mistake of the Node B on whether the UE has received corresponding data packets correctly; therefore, such errors will severely degrade the mixed automatic retransmitting mechanism and HSDPA system performance. As a result, there is strict criterion for error rate of ACK/NACK messages. In conventional HSDPA technology, an additional power offset is added to ACK/NACK transmitting power on the uplink DPCCH in Third Generation Mobile Communication Systems R99; the value of power offset is treated as a system parameter and is sent from network side to the UE. Since R99 uplink DPCCH is received by multiple Node Bs simultaneously and thereby results in macro-diversity gain, while ACK/NACK is only received by 1 Node B (i.e., HSDPA service Node B, referred to as HS-NODEB) and thereby there is no macro-diversity gain, to ensure ACK/NACK is received correctly when the UE is in the soft handover zone, the minimum power offset for ACK/NACK relative to R99 uplink DPCCH has to be higher than the power offset when the UE is out of the soft handover zone, in addition, the value of power offset should be variable. With the existing method, in order to ensure ACK/NACK can be received correctly no matter where the UE is in the cell, the power offset has to be set to the maximum value, which certainly will lead to ACK/NACK transmitting power waste in some cases and unnecessary interference to other code channels. In 3GPP R1-02-0421 Proposal 'Energy requirements for HS-DPCCH signaling with and without special pilot bits', Lucent, 2002.02), a method is put forth, i.e., pilot bits are inserted into 2 CQI time slots in HS-DPCCH to separate HS-DPCCH power control from R99 power control in soft handover; HS-DPCCH power control commands and R99 power control commands (TPCs) are transmitted in DL DPCCH in time division mode. Also in 3GPP R1-01-1177 proposal 'UL Power Control for HSDPA, Samsung, November 19-23, 2001', an independent uplink HS-DPCCH power control in Soft Handover is proposed. In 3GPP R1-02-0215 Proposal 'Power control of ACK/NACK in soft handover, Huawei, 2002.02', a similar method is put forth. The difference is: the proposal in said document doesn't require additional pilot bits; instead, the Node B calculates out actual ACK/NACK power through measuring R99 uplink pilot power and counting. The common drawback of above proposals lies in: R99 downlink power control command bits have to be occupied, which reduces R99 power control frequency. The former proposal also requires additional pilot bits, which occupy position of CQI bits.

### Summary of the Invention

An object of the present invention is to provide a method for controlling power of the uplink DPCCH in soft handover in HSDPA system; said method enables real-time control of the uplink DPCCH transmitting power when the UE is in soft switchover zone and to minimize mean transmitting power and interference of HSDPA HS-DPCCH to other code channels on the premise of meeting ACK/NACK error rate criterion.

To attain said object, the method for controlling power of the uplink DPCCH in soft handover in HSDPA system according to the present invention comprises:
(1) When the User Equipment (UE) enters into the soft handover zone, setting the power offset between HS-DPCCH and R99 uplink DPCCH as default offset of the system, and setting the maximum allowable power offset;
(2) determining whether the UE is in the soft handover zone; if so, receiving TPC (Transmit Power Control) commands from each Node B and merging them, and then going to step (3); otherwise terminating the power control operation;
(3) determining whether the merged TPC is identical to the TPC received from the service Node B (HS-NODEB); if so, going to step (4); otherwise going to step (5);
(4) determining whether the number of times that the merged TPC is identical to the TPC received from HS-NODEB exceeds the specified value, if so, setting the power offset between HS-DPCCH and R99 uplink DPCCH as default offset of the system and then going to step (2) ; otherwise going to step (2) directly;
(5) determining whether the current power offset is less than the maximum allowable power offset; if so, increasing the power offset by 1 and going to step (2); otherwise going to step (2) directly;

Since the present invention adds a transmitting power offset between HS-DPCCH and R99 uplink DPCCH to dynamically compensate HS-DPCCH transmitting power in soft handover when the R99 uplink DPCCH power is controlled by other Node Bs other than the service Node B. Compared with the conventional methods, it is much simpler and doesn't require any modification to uplink/downlink control channels, instead, all operations all accomplished at UE; in addition, since the transmitting power offset between HS-DPCCH and R99 uplink DPCCH is less than or identical to the specified maximum allowable power offset, compared to existing methods that utilize fixed power offsets, the invention can save transmitting power; furthermore, since the invention can avoid HS-DPCCH power to be lower than the target value, it ensures the messages can be received correctly and the error rate meets the criteria. Through adjusting power offset increment and the number of times that the merged TPC is identical to the TPC received from HS-NODEB, the invention can minimize the mean transmitting power on the premise of meeting HS-DPCCH receiving error rate criterion. Therefore, the invention enables real-time control of uplink DPCCH transmitting power when the UE is in the soft handover zone; it reduces mean transmitting power of HSDPA uplink DPCCH and interference to other code channels effectively.

### Brief Description of the Drawings

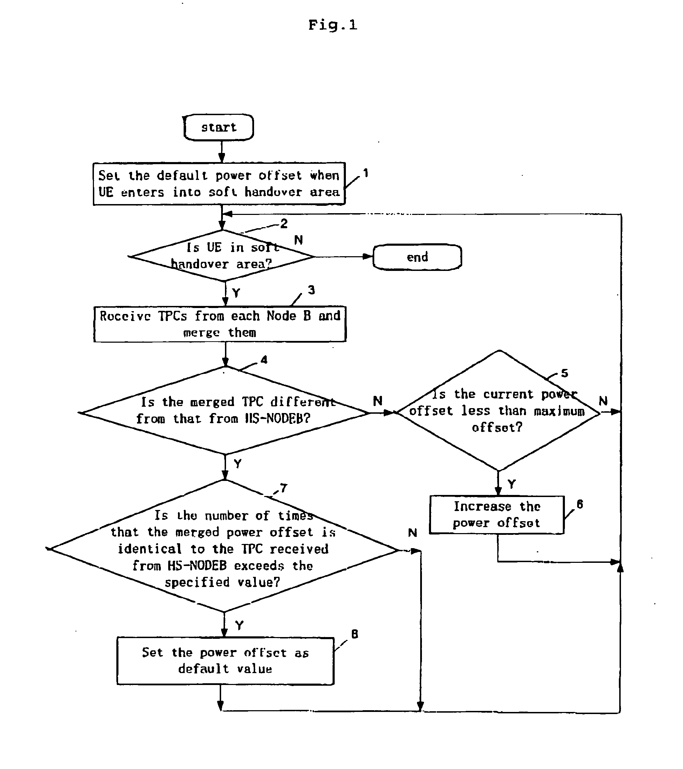

Fig.1 is a flow chart of an embodiment of the method of the present invention.

### Detailed Description of the Embodiments

Since HSDPA HS-DPCCH only communicates with one Node B at any time (including when UE is in the soft handover zone), it is obvious that the communication quality can't be guaranteed if HS-DPCCH power follows R99 uplink DPCCH power in soft handover. If a fixed power offset is added to DPCCH transmitting power, the power offset must ensure HS-DPCCH power is always higher than the target value during the entire soft handover, thus it will result in transmitting power waste. On the basis of above fact, the invention in nature is: UE detects power level of R99 uplink DPCCH and determines whether it is not lower than the target power value of HSDPA service Node B, and then dynamically adjusts HS-DPCCH transmitting power as required to keep HS-DPCCH receiving SNR (Signal Noise Ratio) near the target value, thereby attains the object of saving transmitting power on the premise of ensure correct HS-DPCCH receiving.

Hereunder the present invention is described in further detail with reference to the attached drawings.

Fig.1 is a flow chart of an embodiment of the method of the present invention. As shown in Fig.1, in step 1, when UE enters into the soft handover zone, set the power offset 'Poffset' between HS-DPCCH and R99 uplink DPCCH as default power offset 'Poffset_df' of the system, i.e., set default power offsets for ACK, NACK and CQI respectively (the default power offsets are different with each other); in addition, set the maximum allowable power offset to limit power offset adjusting range, set a counter and maximum count value N to assist in controlling power offset adjustment, and then set counter value to 0. Since the power adjustment is carried out only in the soft handover zone and UE may move out of the soft handover zone at any time, after UE enters into the soft handover zone from non-soft handover zone, it is necessary to determine whether UE is still in the soft handover zone in step 2; if not, it indicates UE has moved out of the soft handover zone, therefore power adjustment in the soft handover zone should be terminated; if UE is in the soft handover zone, the power offset 'Poffset' should be kept greater than or identical to default power offset 'Poffset_df' of the system; to control power offset of UE in soft handover, in step 3, UE receives TPCs from each Node B and merges them to determine increased amplitude of HS-DPCCH transmitting power on the basis of R99 uplink DPCCH transmitting power.

In step 3, UE merges TPCs from the Node Bs with 'or of down' algorithm; that is to say, in the Node Bs that communicate with UE, if any Node B requests UE to decrease uplink transmitting power, UE will decrease it; only when all Node Bs request UE to increase uplink transmitting power, UE will increase it. That method not only ensures preferable communication quality between UE and at least one Node B but also minimizes transmitting power of UE. In the case of soft handover between two Node Bs, for example, suppose that the Node Bs are Node B 1 and Node B 2, the method with 'or of down' algorithm is shown in the following table: wherein, '↑' indicates the Node B requests UE to increase transmitting power (the SNR between UE and the Node B is lower than the target value, the Node B requests UE to increase transmitting power, in order to improve SNR), or it indicates UE increases the transmitting power; '↓' indicates the Node B requests UE to decrease transmitting power (the SNR between UE and the Node B is higher than the target value, the Node B requests UE to decrease transmitting power), or it indicates UE decrease the transmitting power.

| Node B 1 | Node B 2 | UE (merge) |
|---|---|---|
| t | ↑ | t |
| ↑ | ↓ | ↓ |
| ↓ | ↑ | ↓ |
| ↓ | ↓ | ↓ |

It is seen from above table: for Node B 1, there is a case in which the merged TPC is different to the TPC sent by Node B 1, i.e., Node B 1 requests UE to increase transmitting power, Node B 2 requests UE to decrease transmitting power; in that case, UE will decrease transmitting power according to 'or of down' algorithm. When extrapolated to more Node Bs (e.g., Node B 1, Node B 2, Node B 3, ...), for Node B 1, only when TPC of Node B 1 is '↑' and TPCs of all other Node Bs are '↓' , the TPC command executed by UE is different from that from Node B1, i.e., Node B 1 requires '↑', while UE executes '↓'.

If above discrepancy occurs, it indicates the signal transmitting power between Node B 1 and UE is lower than the target value; even in certain cases, when signal quality between Node B 1 and UE is degraded to below the target value, the transmitting power of UE will be decreased instead of being increased due to the effect of 'or of down' algorithm, resulting in enlarged gap between the transmitting power and the target value. Inview of that issue, HS-DPCCH transmitting power should be compensated dynamically in soft handover, i.e., when R99 uplink DPCCH power is controlled by other Node Bs other than the service Node B, the power offset between HS-DPCCH transmitting power and R99 uplink DPCCH transmitting power should be increased.

Therefore, in step 3, determine whether the merged TPC is identical to the TPC received from the service Node B (HS-NODEB) ; if they are not identical to each other, in step 5, determine whether the current power offset is less than the maximum allowable power offset determined in step 1; if the current power offset is not less than the maximum allowable power offset, it indicates the power offset of HS-DPCCH has reached to the peak and can't be increased any more, so go to step 2 to carry out HS-DPCCH offset power control for next cycle; if the current power offset is less than the maximum allowable power offset, it indicates the HS-DPCCH power offset can be increased further, so go to step 6 to increase offset 'Poffset' between HS-DPCCH transmitting power and R99 uplink DPCCH transmitting power by ΔP (ΔP is a system parameter, the ΔP values for ACK, NACK, and CQI may be identical or different) ; otherwise keeps the original power offset 'Poffset' (see the following table) and then go to step 2 to carry out HS-DPCCH offset power control for the next cycle. In this way, HS-DPCCH transmitting power is always kept above the target value through adjusting the power offset between HS-DPCCH transmitting power and R99 DPCCH transmitting power dynamically.

| TPC (HS-NODEB) | TPC (other Node Bs) | TPC (merged) | Poffset |
|---|---|---|---|
| ↑ | ↑ | ↑ | Constant |
| ↑ | ↓ | ↓ | Increased by Δp |
| ↓ | ↑ | ↓ | Constant |
| ↓ | ↓ | ↓ | Constant |

The object of above process is to compensate HS-DPCCH transmitting power when R99 uplink DPCCH power between UE and HS-NODEB is out of control, i.e., HS-DPCCH transmitting power when uplink transmitting power is controlled by other Node Bs other than HS-NODEB. If, in step 3, the merged TPC is determined as identical to the TPC received from HS-NODEB, in order to make the control more practical, in step 7, determine whether the number of times that the merged TPC is identical to the TPC received from HS-NODEB exceeds the maximum count value N, i.e., determine whether the value of counter exceeds N; if it exceeds N, it indicates the up channel power of UE is controlled by HS-NODEB and the actual R99 uplink DPCCH power between UE and HS-NODEB is near the target value, then in step 8, reset the power offset between HS-DPCCH and R99 uplink DPCCH to the default value 'Poffset_df' (i.e. , reset 'Poffset'), reset the counter, and go to step 2 to carry out HS-DPCCH offset power control for the next cycle; that is to say, if there are successive N times that the merged TPC is identical to the TPC received from HS-NODEB, set 'Poffset' to the default value 'Poffset_df'. If, in step 7, the number of times that the merged TPC is identical to the TPC received from HS-NODEB doesn't exceed the maximum count value N, increase the value of counter by 1, and then go to step 2 to carry out HS-DPCCH offset power control for the next cycle.

## Claims

1. A method for controlling power of an uplink Dedicated Physical Control Channel, called hereafter a DPCCH, in soft handover in a High Speed Downlink Packet Access system, called a HSDPA, comprising:
(1) when a User Equipment, called hereafter a UE, enters into a soft handover zone, setting a power offset between a HS-DPCCH and a R99 uplink DPCCH as a default offset of the system, and setting a maximum allowable power offset;
(2) determining whether the UE is in the soft handover zone; if so, receiving Transmit Power Control commands, called hereafter TPC, from each Node B and merging them, and then going to step (3) ; otherwise terminating the power control operation;
(3) determining whether the merged TPC is identical to the TPC received from the service Node B, called hereafter HS-NODEB; if so, going to step (4); otherwise going to step (5);
(4) determining whether the number of times that the merged TPC is identical to the TPC received from HS-NODEB exceeds a specified value, if so, setting the power offset between the HS-DPCCH and the R99 uplink DPCCH as the default offset of the system and then going to step (2) ; otherwise going to step (2) directly;
(5) determining whether the current power offset is less than the maximum allowable power offset; if so, increasing the power offset by 1 and going to step (2); otherwise going to step (2) directly.

2. A method for controlling power of the uplink DPCCH in soft handover in HSDPA system according to claim 1, wherein said number of times that the merged TPC is identical to the TPC received from HS-NODEB in step (4) is counted with a counter.

3. A method for controlling power of the uplink DPCCH in soft handover in HSDPA system according to claim 2, wherein in step (4), after setting the power offset between HS-DPCCH and R99 uplink DPCCH, resetting the counter before going to step (2).

4. A method for controlling power of the uplink DPCCH in soft handover in HSDPA system according to claim 1, 2 or 3, wherein said operation of receiving TPCs from each Node B and merging them in step (2) is carried out as follows:
if the TPC from any Node B requests the UE to decrease the uplink transmitting power, the merged TPC will be the TPC that requests the UE to decrease transmitting power; if the TPCs from all Node Bs request the UE to increase uplink transmitting power, the merged TPC will be the TPC that requests UE to increase transmitting power.

5. A method for controlling power of the uplink DPCCH in soft handover in HSDPA system according to claim 4, wherein said operation of setting the power offset between the HS-DPCCH and the R99 uplink DPCCH as the default offset of the system in step (1) refers to set a default power offset for ACK or NACK and set a default power offset for downlink Channel Quality Indication, called CQI; said default power offsets are different from each other.

## Patentansprüche

1. Verfahren zur Leistungsregelung eines Uplink Dedicated Physical Control Channel, nachstehend als DPCCH bezeichnet, in Soft Handover in einem High-Speed-Downlink-Packet-Access-System, als HSDPA bezeichnet, aufweisend:
(1) Wenn ein User Equipment, nachstehend als UE bezeichnet, in eine Soft-Handover-Zone gelangt, Einstellen eines Power Offset zwischen einem HS-DPCCH und einem R99-Uplink-DPCCH als ein Default Offset des Systems und Einstellen eines maximal zulässigen Power Offset;
(2) Bestimmung, ob sich die UE in der Soft-Handover-Zone befindet; wenn ja, Empfang von Transmit-Power-Control-Befehlen, nachstehend als TPC bezeichnet, von jedem Node B und Verbindung dieser, und dann Übergehen zu Schritt (3); ansonsten Beenden des Leistungsregelungsvorgangs;
(3) Bestimmung, ob die verbundenen TPC mit der von dem Service Node B empfangenen TPC, nachstehend als HS-NODEB bezeichnet, identisch ist; wenn ja, Übergang zu Schritt (4); ansonsten Übergang zu Schritt (5);
(4) Bestimmung, ob die Anzahl der Fälle, in denen die verbundenen TPC mit der von dem HS-NODEB empfangenen TPC identisch ist, einen vorgeschriebenen Wert übersteigt; wenn ja, Einstellung des Power Offsets zwischen dem HS-DPCCH und dem R99 Uplink DPCCH als Default Offset des Systems und dann Übergang zu Schritt (2); ansonsten direkter Übergang zu Schritt (2);
(5) Bestimmung, ob das aktuelle Power Offset kleiner ist als das maximale zulässige Power Offset; wenn ja, Erhöhung des Power Offsets um 1 und Übergang zu Schritt (2); ansonsten direkter Übergang zu Schritt (2).

2. Verfahren zur Leistungsregelung des DPCCH Uplinks in Soft Handover in einem HSDPA-System nach Anspruch 1, wobei die Anzahl der Fälle,in denen die verbundenen TPC mit der von dem HS-NODEB empfangenen TPC in Schritt (4) identisch ist, mit einem Zähler gezählt wird.

3. Verfahren zur Leistungsregelung des DPCCH Uplinks in Soft Handover in einem HSDPA-System nach Anspruch 2, wobei in Schritt (4) nach Einstellen des Power Offset zwischen HS-DPCCH und R99 Uplink DPCCH der Zähler vor Übergang zu Schritt (2) rückgesetzt wird.

4. Verfahren zur Leistungsregelung des Uplink DPCCH in Soft Handover in einem HSDPA-System nach Anspruch 1, 2 oder 3, wobei der Vorgang des Empfangens von TPCs von jedem Node B und Verbindung dieser in Schritt (2) folgendermaßen durchgeführt wird: Wenn die TPC von einem beliebigen Node B eine Verringerung der Uplink-Sendeleistung durch die UE anfordert, werden die verbundenen TPC die TPC sein, die eine Verringerung der Sendeleistung durch die UE anfordern; wenn die TPCs von allen Node Bs eine Erhöhung der Uplink-Sendeleistung durch die UE anfordern, werden die verbundenen TPC die TPC sein, die eine Erhöhung der Sendeleistung durch die UE anfordern.

5. Verfahren zur Leistungsregelung des DPCCH Uplinks in Soft Handover in einem HSDPA-System nach Anspruch 4, wobei der Vorgang des Einstellens des Power Offset zwischen dem HS-DPCCH und dem R99 Uplink DPCCH als Default Offset des Systems in Schritt (1) sich darauf bezieht, ein Default Power Offset für ACK oder NACK einzustellen und ein Default Power Offset für eine Downlink-Kanalqualitätsangabe, als CQI bezeichnet, einzustellen, wobei sich die Default Power Offsets voneinander unterscheiden.

## Revendications

1. Procédé permettant de réguler la puissance d'une voie de commande physique dédiée ascendante, dénommée ci-après DPCCH, dans un transfert intercellulaire sans rupture de lien, dans un système d'accès par paquets descendants à grande vitesse, dénommé HSDPA, comprenant :
(1) lorsqu'un équipement utilisateur, dénommé ci-après EU, entre dans une zone de transfert intercellulaire sans rupture de lien, l'établissement d'un décalage de puissance entre une DPCCH-HS et une DPCCH ascendante R99 comme décalage par défaut du système, et l'établissement d'un décalage de puissance maximal admissible ;
(2) la détermination de la présence ou non de l'UE dans la zone de transfert intercellulaire sans rupture de lien ; le cas échéant, la réception des instructions de régulation de la puissance d'émission, dénommée ci-après TPC, à partir de chaque noeud B et la fusion de ces instructions, puis le passage à l'étape (3) ; sinon, l'achèvement de l'opération de régulation de puissance ;
(3) la détermination de savoir si la TPC fusionnée est identique ou non à la TPC reçue à partir du noeud de service B, dénommé ci-après NOEUDB-HS ; le cas échéant, le passage à l'étape (4) ; sinon, le passage à l'étape (5) ;
(4) la détermination de savoir si le nombre de fois où la TPC fusionnée est identique à la TPC reçue à partir du NOEUDB-HS dépasse une valeur spécifiée ; le cas échéant, l'établissement du décalage de puissance entre la DPCCH-HS et la DPCCH ascendante R99 comme décalage par défaut du système, puis le passage à l'étape (2) ; sinon, le passage à l'étape (2) directement ;
(5) la détermination de savoir si le décalage de puissance actuel est inférieur au décalage de puissance maximal admissible ; le cas échéant, l'augmentation du décalage de puissance de 1 et le passage à l'étape (2) ; sinon, le passage à l'étape (2) directement.

2. Procédé permettant de réguler la puissance de la DPCCH ascendante dans un transfert intercellulaire sans rupture de lien, dans un système HSDPA selon la revendication 1, dans lequel ledit nombre de fois où la TPC fusionnée est identique à la TPC reçue à partir du NOEUDB-HS à l'étape (4) est décompté à l'aide d'un compteur.

3. Procédé permettant de réguler la puissance de la DPCCH ascendante dans un transfert intercellulaire sans rupture de lien, dans un système HSDPA selon la revendication 2, dans lequel, à l'étape (4), après avoir établi le décalage de puissance entre la DPCCH-HS et la DPCCH ascendante R99, le compteur est réinitialisé avant de passer à l'étape (2).

4. Procédé permettant de réguler la puissance de la DPCCH ascendante dans un transfert intercellulaire sans rupture de lien, dans un système HSDPA selon la revendication 1, 2 ou 3, dans lequel ledit fonctionnement des TPC de réception à partir de chaque noeud B et leur fusion à l'étape (2) sont réalisés comme suit : si la TPC provenant de tout noeud B demande à l'EU de réduire la puissance d'émission en liaison ascendante, la TPC fusionnée est la TPC qui demande à l'EU de réduire la puissance d'émission ; si les TPC provenant de l'ensemble des noeuds B demandent à l'EU d'augmenter la puissance d'émission en liaison ascendante, la TPC fusionnée est la TPC qui demande à l'EU d'augmenter la puissance d'émission.

5. Procédé permettant de réguler la puissance de la DPCCH ascendante dans le transfert intercellulaire, dans un système HSDPA selon la revendication 4, dans lequel ladite opération d'établissement du décalage de puissance entre la DPCCH-HS et le DPCCH ascendante R99 comme décalage par défaut du système à l'étape (1) fait référence à un décalage de puissance par défaut pour l'ACK ou le NACK et à l'établissement d'un décalage de puissance par défaut pour l'indication de qualité de la voie descendante, dénommée CQI ; lesdits décalages de puissance par défaut sont différents les uns des autres.
